# EUROPÄISCHE PATENTSCHRIFT

(11) **EP 0 496 990 B1**
(45) Veröffentlichungstag und Bekanntmachung des Hinweises auf die Patenterteilung: **01.03.1995**
(21) Anmeldenummer: 91121583.8
(22) Anmeldetag: 17.12.1991
(51) Int. Cl.: B65F 1/14, B62B 3/10

(54) **Altstoff-Sammeleinrichtung**
Garbage collection arrangement
Ensemble de ramassage de déchets

(30) Priorität: 25.01.1991 DE 9100871 U
(43) Veröffentlichungstag der Anmeldung: 05.08.1992
(73) Patentinhaber: SCHLOSSER & CO GmbH, D-85229 Markt Indersdorf (DE)
(72) Erfinder: Nickl, Johann, w-8062 Markt Indersdorf (DE)
(74) Vertreter: Urner, Peter, Dipl.-Phys.

(56) Entgegenhaltungen:
- CH-A- 599 886
- DE-U- 8 700 267
- DE-U- 9 014 238
- FR-A- 2 599 953
- US-A- 4 351 541

## Beschreibung

Die Erfindung betrifft eine Altstoff-Sammeleinrichtung gemäß dem Oberbegriff des Patentanspruchs 1.

Eine derartige Altstoff-Sammeleinrichtung ist bereits aus der FR-A-2 599 953 bekannt. Diese bekannte Altstoff-Sammeleinrichtung weist ein Modulelement auf, das aus einem auf Lenkrollen stehenden Wagen und einem tonnenförmigen Altstoffsammler besteht, der so von oben in einen kastenförmigen Aufnahmebereich des Wagens passend eingesetzt ist, daß er diesen an keiner Stelle überragt und auf einer Bodenwand des Wagens aufsitzt.

Eine weitere Altstoff-Sammeleinrichtung ist auch aus dem Deutschen Gebrauchsmuster DE-U-90 14 238 bekannt. Diese bekannte Altstoff Sammeleinrichtung weist wenigstens ein Modulelement auf, das aus einem auf Lenkrollen stehenden Wagen und einem tonnenförmigen Altstoffsammler besteht, der so auf den Wagen aufgesetzt ist, daß er an keiner Stelle den Wagen überragt, wobei der Wagen mit einer Koppeleinrichtung versehen ist, um mit anderen verkoppelt zu werden.

Aus dem Deutschen Gebrauchsmuster G 87 00 267.1 ist ein verfahrbares Traggestell für Abfalleimer bekannt. Dieses verfahrbare Traggestell für vorzugsweise im Querschnitt viereckige Abfalleimer weist einen Tragboden auf, auf dem die Eimer stehen. Das fahrbare Traggestell zeichnet sich aus durch an jeder Gestellschmalseite angeordnete senkrechte und an oder in Nähe der einen Tragbodenlängsseite angeordnete Stützstreben, durch eine im oberen Endabschnitt der Streben diese miteinander verbindende Traverse und durch eine seitlich oberhalb der Traverse zwischen beiden Streben sich erstreckende Achse, die die zueinander parallelen Flansche von zu mehreren nebeneinander schwenkbar an der Achse gehaltenen Einzeldeckeln durchsetzt. Die Einzeldeckel dienen zum Abdecken der auf dem Tragboden stehenden Abfalleimer.

Ferner ist aus der CH-A-599 886 eine Altstoff-Sammeleinrichtung bekannt, bei der zwei tonnenförmige Altstoffsammler miteinander verkoppelt werden und dann einen auf Lenkrollen stehenden Wagen bilden.

Darüber hinaus ist aus der US-A-4,351,541 ein tonnenförmiger Altstoffsammler bekannt, der unmittelbar an seiner Bodenunterseite Lenkrollen trägt. Er kann mit anderen tonnenförmigen Altstoffsammlern verkoppelt werden.

Der Erfindung liegt die Aufgabe zugrunde, die Altstoff-Sammeleinrichtung der eingangs genannten Art so weiterzubilden, daß sie sich zur Erfassung einer Mehrzahl von Fraktionen von zu sammelnden Altstoffen leicht erweitern läßt, und die gleichzeitig wenig Platz beansprucht, sich in einfacher Weise handhaben bzw. verschieben läßt.

Die Lösung der gestellten Aufgabe ist im kennzeichnenden Teil des Patentanspruchs 1 angegeben. Vorteilhafte Ausgestaltungen der Erfindung sind den Unteransprüchen zu entnehmen.

Eine Altstoff-Sammeleinrichtung nach der Erfindung zeichnet sich dadurch aus, daß
- der Wagen samt kastenförmigem Aufnahmebereich als Hohlquader ausgebildet ist;
- eine obere Wand des Hohlquaders eine Ausnehmung aufweist, in die der Altstoffsammler eingesetzt ist;
- jeweils eine der Lenkrollen in einer Ecke der Bodenwand des Hohlquaders angeordnet ist;
- die Bodenwand des Hohlquaders nicht durchgehend ist; und
- der Wagen mit einer Kopplungseinrichtung versehen ist, um mit anderen verkoppelt zu werden.

Altstoff-Sammeleinrichtungen gewinnen heutzutage mehr und mehr an Bedeutung, insbesondere dort, wo Altstoffe in großen Mengen anfallen und nach Fraktionen getrennt werden müssen. Dies ist beispielsweise in Großkantinen, Restaurants, im Krankenhausbereich, usw., der Fall.

Bei der erfindungsgemäßen Altstoff-Sammeleinrichtung ist es möglich, nur ein einziges Modulelement zu verwenden, wenn keine allzu großen Mengen an Altstoffen bzw. Abfällen zu erwarten sind. Sollen Altstoffe nach mehreren Fraktionen getrennt werden, so kann der Altstoffsammler des Modulelements zwei oder mehrere vertikale Trennwände zur Bildung von unterschiedlichen Kammern aufweisen. Das Modulelement läßt sich leicht verschieben, um die Altstoffe von der Sammelstelle zur Entsorgungsstelle zu bringen, da der Wagen, der zur Aufnahme des Altstoffsammlers dient, verschiebbar ist, worin es auf Lenkrollensteht. Ist die Anzahl der zu sammelnden Fraktionen an Altstoffen sehr groß, so können mehrere Modulelemente miteinander gekoppelt werden, Hierzu werden die einzelnen Wagen der Modulelemente eng miteinander verbunden, so daß die einzelnen Altstoffsammler den jeweiligen Wagen an keiner Stelle seitlich überragen dürfen. Die aus mehreren Modulelementen bestehende Altstoff-Sammeleinrichtung läßt sich ebenso einfach wie ein einzelnes Modulelement von der Sammelstelle zur Entsorgungsstelle bringen, und zwar in nur einem einzigen Arbeits- bzw. Verschiebevorgang. Durch das gleichzeitige Verschieben der aus mehreren Modulelementen zusammengestellten Altstoff-Sammeleinrichtung läßt sich die Altstoffentsorgung insbesondere in Krankenhäusern, Großkantinen und dergleichen, erheblich vereinfachen.

Der Wagen eines jeden Modulelements ist kastenförmig bzw. quaderförmig ausgebildet, wobei er in seiner oberen Wand eine Ausnehmung aufweist, in die der Altstoffsammler passend einsetzbar ist. Der Altstoffsammler kommt dann auf der unteren Wand des Wagens zu stehen.

Altstoffsammler und Wagen können somit in sehr einfacher Weise und sicher miteinander verbunden werden, indem der Altstoffsammler lediglich in die entsprechende Ausnehmung in der oberen Wand des Wagens eingesetzt wird, Ein Herunterkippen des Altstoffsammlers vom Wagen beim Transport des Modulelements von der Sammelstelle zur Entsorgungsstelle ist daher praktisch nicht mehr möglich. Die Entleerung des Altstoffsammlers an der Entsorgungsstelle erfordert darüber hinaus keinen allzu großen Kraftaufwand, da der Wagen nicht mit angehoben zu werden braucht. Vielmehr wird nur der Altstoffsammler aus der Ausnehmung des Wagens nach oben heraus genommen, so daß das Gewicht des Wagens hierbei keine Rolle spielt.

Der Wagen besteht vorzugsweise aus abgebogenem Metallblech, wobei aneinander liegende Kanten des Metallblechs miteinander verschweißt oder verlötet sind. Der Wagen selbst besitzt somit nur ein geringes Eigengewicht, was sich vorteilhaft bei der Verschiebung des Modulelements oder mehrerer zusammengekoppelter Modulelemente auswirkt. Da der Altstoffsammler in den Wagen eingesetzt ist, liegt der Schwerpunkt des Modulelements relativ weit unten, so daß auch bei einem leichten Wagen nicht die Gefahr besteht, daß das Modulelement kopflastig wird. Die Koppeleinrichtung, mit der sich jeweils zwei Modulelemente miteinander verbinden lassen, besteht aus wenigstens einem Paar von Löchern pro Wagen im Seitenbereich der oberen Wand des Wagens, wobei durch beide Löcher ein gemeinsamer Bügel von oben hindurchragt, dessen Enden unterschiedlich lang sind. Das längere Ende des Bügels ist mit einem Stopper versehen, so daß sich dieses Ende nicht mehr aus dem einen der beiden Löcher herausziehen läßt. Dies ist nur noch bezüglich des kürzeren Endes des Bügels möglich, wobei dieses Ende nach Verschiebung des Bügels in ein Loch eines Lochpaares eingesetzt wird, das sich in der oberen Wand des anderen Wagens befindet und dem zuerstgenannten Lochpaar gegenüber liegt. Der Bügel des zweiten Lochpaares ist in umgekehrter Weise wie der erste Bügel angeordnet, so daß sich der kurze Schenkel des zweiten Bügels in das freie Loch des zuerst genannten Lochpaares einsetzten läßt. Auf diese Weise kommen pro Lochpaar zwei Verbindungen zwischen dem ersten und dem zweiten Wagen zustande.

Derartige Lochpaare können auch noch in anderen Seitenbereichen der oberen Wand des Wagens vorhanden sein, so daß Modulelemente in mehreren Richtungen miteinander verbindbar sind. Beispielsweise lassen sich auch Modulelemente in quadratischer Anordnung koppeln, um zum Beispiel zwei mal zwei oder drei mal drei, oder dergleichen, Modulelemente zusammenzustellen.

Der Altstoffsammler selbst kann jede beliebige Form aufweisen, beispielsweise zylinder- oder quaderförmig ausgebildet sein. Im Fall einer quaderförmigen Ausbildung des Altstoffsammlers kann dieser an einer seiner oberen Seitenkanten einen nach außen umgebogenen Wandbereich aufweisen, so daß der Altstoffsammler vorübergehend nach Herausnahme aus dem Wagen auf eine entsprechende Wandhalterung aufgesetzt werden kann, die der nach außen umgebogene Wandbereich übergreift.

Vorzugsweise ist der Altstoffsammler mit einem Deckel verschließbar, der jedoch auch nur so groß ausgebildet ist, daß er den seitlichen Bereich des Wagens nicht überragt. Dies gilt auch für an Altstoffsammler und Deckel gegenüberliegend befestigte Griffelemente zur Bildung eines Handgriffs, der ebenfalls nicht über die Seiten des Wagens herausstehen darf, da sich sonst mehrere Modulelemente nicht eng genug oder gar nicht miteinander verkoppeln ließen.

Als Koppeleinrichtungen können auch noch andere Einrichtungen in Frage kommen, zum Beispiel Permanentmagnet-Kopplungen oder Rastkopplungen.

Die Erfindung wird nachfolgend unter Bezugnahme auf die Zeichnung näher beschrieben. Es zeigen:
Fig. 1 ein Modulelement mit Wagen und darin eingesetztem Altstoffsammler ohne Deckel und
Fig. 2 zwei miteinander gekoppelte Modulelemente.

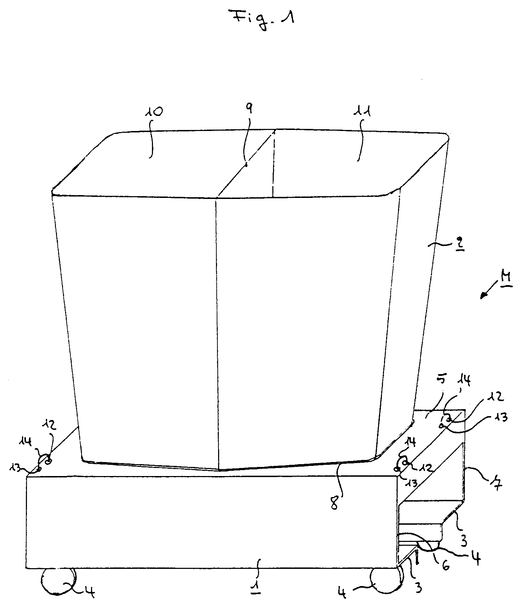

Gemäß Fig. 1 besteht ein Modulelement aus einem Wagen 1 und einem Altstoffsammler 2. Der Wagen 1 ist hohlquaderförmig ausgebildet und aus Stahlblech gefertigt, das entsprechend abgewinkelt ist. Um den Wagen 1 in alle Richtungen verschieben zu können, sind an seiner Bodenseite 3 bzw. unteren Wand Lenkrollen 4 befestigt, und zwar jeweils eine in einer Ecke der Bodenwand 3.

Eine obere Wand des Wagens 1, die mit der Bodenwand 3 über Seitenwände 6 und 7 verbunden ist, weist eine Ausnehmung 8 auf, in die der Altstoffsammler 2 passend eingesetzt ist. Die Ausnehmung 8 weist eine solche Größe auf, daß sie den Altstoffsammler 2 passend umgibt, wenn dieser mit seiner nicht dargestellten untern Seite auf der Bodenwand 3 des Wagens 1 aufliegt. Auf diese Weise wird weitestgehend ein Verkippen des Altstoffsammlers 2 auf dem Wagen 1 bzw. innerhalb der Ausnehmung 8 verhindert.

Der Altstoffsammler 2 kann aus Kunststoff hergestellt sein und ist vorliegend wenigstens annähernd ebenfalls quaderförmig ausgebildet. Er ist von oben mit Altstoffen bzw. Abfall beschickbar. Um die Altstoffe nach Fraktionen getrennt sammeln zu können, befindet sich mittig innerhalb des Altstoffsammlers 2 eine Trennwand 9, so daß innerhalb des Altstoffsammlers 2 zwei Kammern 10 und 11 erhalten werden. Diese Kammern 10 und 11 sind durch die Trennwand 9 vollständig voneinander getrennt, wobei die Trennwand 9 vertikal verläuft. Sie kann beispielsweise in entsprechenden Nuten an der Innenwand des Altstoffsammlers 2 gehalten werden, durch die auch eine flüssigkeitsdichte Trennung zwischen den Kammern 10 und 11 möglich wird.

Um den Altstoffsammler 2 leichter aus der Ausnehmung 8 herausnehmen zu können, kann er seitlich mit nicht dargestellten Griffen versehen sein, die jedoch nicht seitlich über die obere Wand 5 des Wagens 1 hinausstehen. Dies gilt auch für sämtliche anderen Bereiche des Altstoffsammlers 2. In entsprechender Weise ist ein Deckel ausgebildet, um den Altstoffsammler 2 oben zu verschließen.

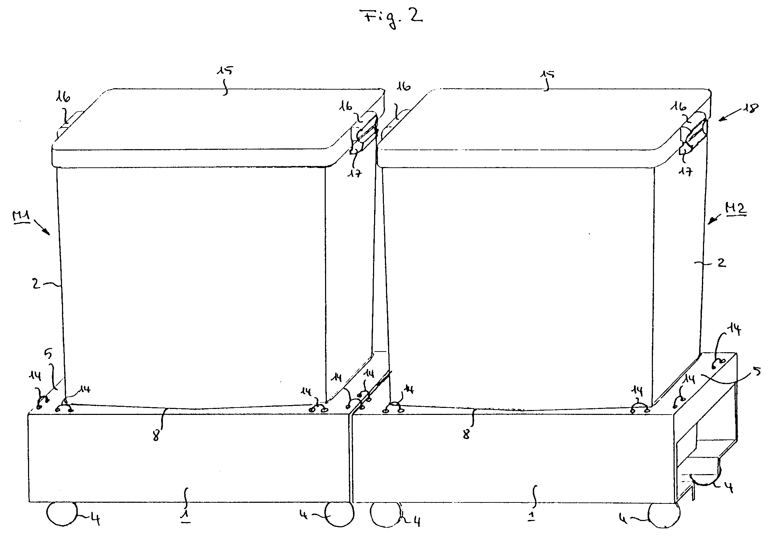

Zur Koppelung mehrere Modulelemente M miteinander befinden sich in der oberen Wand 5 des Wagens 1 mehrere im seitlichen Bereich vorhandene Paare von Löchern 12, 13. Die Verbindungslinie der jeweiligen Löcher 12, 13 eines Paares läuft parallel zur Kante der oberen Wand 5. Durch beide Löcher 12, 13 eines Lochpaares ragt ein Bügel 14 von oben nach unten durch. Jeder Bügel besitzt zwei Schenkel, von denen einer das Loch 12 und ein anderer das Loch 13 durchragt. Beide Schenkel sind unterschiedlich lang. Am Ende des längeren Schenkels befindet sich ein Stopperelement, beispielsweise eine aufgeschraubte Schraube oder dergleichen, um zu verhindern, daß der lange Schenkel wieder aus dem entsprechenden Loch des Lochpaares herausgezogen werden kann. Wird der jeweilige Bügel 14 vollständig nach oben gezogen, so gelangt jedoch der kürzere Schenkel des Bügels 14 aus seinem entsprechenden Loch heraus und läßt sich in ein gegenüberliegendes Loch eines weiteren Wagens 1 von oben hineinsetzten, der mit dem zuerst genannten Wagen verbunden werden soll. Dies ist in Fig. 2 näher dargestellt.

Gemäß Fig. 2 sind zwei Modulelemente M1, M2 miteinander gekoppelt. Dabei greift jeweils der kurze Schenkel eines Bügels 14 eines Lochpaares in das freie und gegenüberliegende Loch eines Lochpaares im benachbarten Wagen 1 ein. Hierzu müssen natürlich die langen Schenkel der Bügel 14 durch unterschiedliche Löcher der jeweiligen Lochpaare hindurchgreifen.

Abweichend von den Figuren 1 und 2 können sich derartige Lochpaare auch an den langen Seiten der oberen Wand 5 befinden, so daß auch eine Wagenkopplung möglich ist, wenn sich die Wagen mit ihren langen Seitenflächen einander gegenüberliegen.

Bei der in Fig. 2 dargestellten Altstoff-Sammeleinrichtung sind die Altstoffsammler 2 jeweils mit einem Deckel 15 abgedeckt. Jeder Deckel 15 weist im seitlichen Bereich zwei Griffelemente 16 auf, die mit entsprechenden Griffelementen 17 korrespondieren, die sich am oberen Rand der jeweiligen Altstoffsammler 2 befinden. Die Griffelemente 16 und 17 bilden somit Griffe bzw. Handgriffe 18, mit deren Hilfe sich der Altstoffsammler 2 bei geschlossenem Deckel 15 aus der Ausnehmung 8 herausnehmen läßt.

Die offenen Stirnseiten des Wagens 1 können noch mit Kunststoffleisten oder Kappen abgedeckt sein, um die Gefahr von Verletzungen des Bedienungspersonal zu verringern.

## Patentansprüche

1. Altstoff-Sammeleinrichtung, mit einem Modulelement (M), das aus einem auf Lenkrollen (4) stehenden Wagen (1) und einem tonnenförmigen Altstoffsammler (2) besteht, der so von oben in einen kastenförmigen Aufnahmebereich des Wagens (1) passend eingesetzt ist, daß er diesen an keiner Stelle überragt und auf einer Bodenwand (3) des Wagens (1) aufsitzt, **dadurch gekennzeichnet**, daß
- der Wagen (1) samt kastenförmigem Aufnahmebereich als Hohlquader ausgebildet ist;
- eine obere Wand (5) des Hohlquaders eine Ausnehmung (8) aufweist, in die der Altstoffsammler (2) eingesetzt ist;
- jeweils eine der Lenkrollen (4) in einer Ecke der Bodenwand (3) des Hohlquaders angeordnet ist;
- die Bodenwand (3) des Hohlquaders nicht durchgehend ist; und
- der Wagen (1) mit einer Kopplungseinrichtung (12, 13, 14) versehen ist, um mit anderen verkoppelt zu werden.

2. Altstoff-Sammeleinrichtung nach Anspruch 1, **dadurch gekennzeichnet**, daß der Wagen (1) aus abgebogenem Metallblech besteht und aneinander liegende Kanten des Metallblechs miteinander verschweißt oder verlötet sind.

3. Altstoff-Sammeleinrichtung nach Anspruch 1 oder 2, **dadurch gekennzeichnet**, daß die Koppeleinrichtung aus wenigstens einem Paar von Löchern (12, 13) im Seitenbereich der oberen Wand (5) des Wagens (1) besteht, durch die beide ein gemeinsamer Bügel (14) von oben hindurchragt, dessen Enden unterschiedlich lang sind, wobei das längere Ende des Bügels (14) mit einem Stopper versehen ist.

4. Altstoff-Sammeleinrichtung nach einem der Ansprüche 1 bis 3, **dadurch gekennzeichnet**, daß der Altstoffsammler (2) mit einem Deckel verschließbar ist.

5. Altstoff-Sammeleinrichtung nach Anspruch 4, **dadurch gekennzeichnet**, daß Altstoffsammler (2) und Deckel (15) mit einander gegenüberliegenden Griffelementen (16, 17) zur Bildung eines Handgriffs (18) versehen sind, der nicht über die Seiten des Wagens (1) hinaussteht.

6. Altstoff-Sammeleinrichtung nach einem der Ansprüche 1 bis 5, **dadurch gekennzeichnet**, daß der Altstoffsammler (2) quaderförmig ausgebildet ist und wenigstens an einer seiner oberen Seitenkanten einen nach außen umgebogenen Wandbereich aufweist.

7. Altstoff-Sammeleinrichtung nach einem der Ansprüche 1 bis 6, **dadurch gekennzeichnet**, daß der Altstoffsammler (2) wenigstens eine vertikale Trennwand (9) zur Bildung von mehreren Kammern (10, 11) aufweist.

8. Altstoff-Sammeleinrichtung nach Anspruch 1, **dadurch gekennzeichnet**, daß der Wagen (1) offene Stirnseiten aufweist.

## Claims

1. Waste-collecting arrangement, having a module element (M) which is composed of a carriage (1) standing on castors (4) and of a cask-like waste collector (2) which can be fitted, from above, into a box-shaped receiving region of the carriage (1) such that it does not project beyond this at any location and is seated on a base wall (3) of the carriage (1), characterized in that the carriage (1), together with the box-shaped receiving region, is designed as a hollow cuboid; an upper wall (5) of the hollow cuboid exhibits a cutout (8) into which the waste collector (2) is introduced; in each case one of the castors (4) is arranged in a corner of the base wall (3) of the hollow cuboid; the base wall (3) of the hollow cuboid is not continuous; and the carriage (1) is provided with a coupling device (12, 13, 14) in order to be coupled to other carriages.

2. Waste-collecting arrangement according to Claim 1, characterized in that the carriage (1) consists of a bent-off metal sheet, and abutting edges of the metal sheet are welded or soldered to one another.

3. Waste-collecting arrangement according to Claim 1 or 2, characterized in that the coupling device is composed of at least one pair of holes (12, 13) in the side region of the upper wall (5) of the carriage (1) through which two holes there projects, from above, a common bow (14) whose ends are of different lengths, the longer end of the bow (14) being provided with a stopper.

4. Waste-collecting arrangement according to one of Claims 1 to 3, characterized in that the waste collector (2) can be closed by means of a cover.

5. Waste-collecting arrangement according to Claim 4, characterized in that the waste collector (2) and cover (15) are provided with mutually opposite grip elements (16, 17) in order to form a handle (18) which does not jut out beyond the sides of the carriage (1).

6. Waste-collecting arrangement according to one of Claims 1 to 5, characterized in that the waste collector (2) is designed in the form of a cuboid and, at least on one of its upper side edges, exhibits an outwardly bent-over wall region.

7. Waste-collecting arrangement according to one of Claims 1 to 6, characterized in that the waste collector (2) exhibits at least one vertical partition wall (9) for forming a plurality of chambers (10, 11).

8. Waste-collecting arrangement according to Claim 1, characterized in that the carriage (1) exhibits open end sides.

## Revendications

1. Dispositif de collecte de matières et produits usagés, comprenant un élément modulaire (M), qui se compose d'un véhicule (1) monté sur des roulettes orientables (4) et d'un collecteur de matières et produits usagés (2) en forme de tonneau, qui est engagé de façon ajustée par le dessus dans une zone de réception en forme de boîte du véhicule (1), de façon à ne pas dépasser en aucun point de ce véhicule et qui est posé sur une paroi de fond (3) du véhicule (1), caractérisé en ce que :
- le véhicule (1), y compris la zone de réception en forme de boîte, est réalisé sous la forme d'un parallélépipède creux;
- une paroi supérieure (5) du parallélépipède creux comporte une cavité (8) dans laquelle est engagé le collecteur de matières et produits (2);
- chacune des roulettes orientables (4) est disposée dans un coin de la paroi de fond (3) du parallélépipède creux;
- la paroi de fond (3) du parallélépipède creux n'est pas traversante;
- le véhicule (1) est muni d'un organe d'accouplement (12, 13, 14) permettant de l'accoupler à d'autres.

2. Dispositif de collecte de matières et de produits usagés selon la revendication 1, caractérisé en ce que le véhicule (1) se compose de tôles métalliques pliées et d'arêtes de tôles métalliques disposées les unes au-dessus des autres et soudées ou brasées les unes aux autres.

3. Dispositif de collecte de matières et de produits usagés selon la revendication 1 ou 2, caractérisé en ce que l'organe d'accouplement se compose d'au moins une paire de trous (12, 13) dans la zone latérale de la paroi supérieure (5) du véhicule (1), les deux trous étant traversés depuis le haut par un étrier commun (14), dont les extrémités présentent des longueurs différentes, la plus longue extrémité de l'étrier (14) étant munie d'un organe d'arrêt.

4. Dispositif de collecte de matières et de produits usagés selon l'une des revendications 1 à 3, caractérisé en ce que le récipient de collecte de matières et produits usagés (2) est susceptible d'être fermé par un couvercle.

5. Dispositif de collecte de matières et de produits usagés selon la revendication 4, caractérisé en ce que le récipient de collecte de matières et de produits usagés (2) et le couvercle (15) sont munis d'éléments d'accrochage (16, 17) disposés l'un en face de l'autre pour constituer une poignée (18), qui ne vient pas en saillie sur les faces du véhicule (1).

6. Dispositif de collecte de matières et de produits usagés selon l'une des revendications 1 à 5, caractérisé en ce que le récipient de collecte de matières et de produits usagés (2) présente une forme parallélépipèdique et comporte au moins sur l'une de ses arêtes supérieures latérales une zone de paroi repliée vers l'extérieur.

7. Dispositif de collecte de matières et de produits usagés selon l'une des revendications 1 à 6, caractérisé en ce que le récipient de collecte de matières et de produits usagés (2) comporte au moins une paroi de séparation verticale (9) pour constituer plusieurs chambres (10, 11).

8. Dispositif de collecte de matières et de produits usagés selon la revendication 1, caractérisé en ce que le véhicule (1) comporte des faces frontales ouvertes.
